# EUROPEAN PATENT APPLICATION

(11) **EP 1 006 472 A2**
(43) Date of publication of application: **07.06.2000**
(21) Application number: 99204053.5
(22) Date of filing: 01.12.1999
(51) Int. Cl.: G06F 17/60

(54) **Method and system for performing multibank automated financial transactions involving foreign currencies**

(30) Priority: 04.12.1998 US 111029
(71) Applicant: Crossmar, INC., New York, NY 10043 (US)
(72) Inventor: Rayner, Peter, Westfield, New Jersey 07090 (US); Brooks, Elizabeth, Falmouth, Cornwall TR11 5JW (GB); Potter, Neil, Westfield, New Jersey 07090 (US); Jacobs, David, Wayne, New Jersey 07866 (US); Anasson, Cynthia, Orange, Connecticut 06477 (US)
(74) Representative: Hynell, Magnus

(57) **Abstract**

A method and system for performing multibank automated financial transactions involving currency exchange includes a plurality of discrete, standing price currency exchange dealing systems, each operating under the control of a particular financial institution, and each coupled over a secure network to the computer terminal of a user. The user communicates with each of the discrete dealing systems over the secure network and can secure competitive currency exchange price quotes without redialing or logging in separately to each of the dealing systems.

## Description

### CROSS REFERENCE TO RELATED APPLICATIONS

This application claims priority to Applicant's copending application having U.S. Serial No. 60/111,029 filed December 4, 1999.

### FIELD OF THE INVENTION

The present invention relates generally to automated financial transactions and, more particularly, to a method and system for performing multibank automated financial transactions involving currency exchange.

### BACKGROUND OF THE INVENTION

In the past, currency exchange transactions, for example, for a business organization in connection with pricing foreign goods/services were time and labor intensive, because the exchange rate was generated manually by a trader. Further, there was a lack of uniformity in rates, because different traders often quoted different rates based on subjective considerations. Additionally, since trades were done by telephone, there was generally a lack of an audit trail. Also, there was a great deal of uncertainty because of rate fluctuations over relatively short periods of time. Applicant's U.S. Patent No. 5,787,402 addressed many of those problems by providing a method and system for performing financial transactions involving foreign currency deals in virtually all trading currencies which automatically incorporated the current market process and operated in a secure environment.

According to Applicant's U.S. Patent No. 5,787,402, customers can access the system on-line and in real time through various terminals, such as a personal computer. By inputting information in response to prompts on the computer screen, the system quickly identifies the nature of the transaction which the customer desires. The system then automatically generates an offer in response to the customer's request based upon a number of parameters, including the market price, the size and nature of the transaction, and the size and nature of the client. The system then promptly displays the bank's offer to the customer. The customer is then given an opportunity to accept the offer, ask that the offer be updated, or reject the offer. If the customer delays for too long, the system automatically withdraws and updates the offer, thereby protecting the bank from liability for a "stale" rate. If accepted, the trade is automatically forwarded for processing and assigned a reference number for tracking and control purposes.

While the system of Applicant's U.S. Patent No. 5,787,402 affords an effective automated system for financial transactions involving foreign currencies with a single bank, many organizations are required to receive multiple foreign exchange quotes in transactions which exceed a certain specified amount. Further, many organizations have policies which require competitive quotations in any foreign exchange. Thus, there is a current need for a method and system for performing multibank automated financial transactions involving foreign currencies.

### SUMMARY OF THE INVENTION

It is a feature and advantage of the present invention to provide a method and system for performing multibank automated financial transactions involving foreign currency which enables trading of foreign currency on a standing price.

It is another feature and advantage of the present invention to provide a method and system for performing multibank automated financial transactions involving foreign currency which assures a nondiscriminatory price presentation in which the prices are presented as quotes received, in which one bank does not hold back another, and in which rate time-outs are handled independently.

It is an additional feature and advantage of the present invention to provide a method and system for performing multibank automated financial transactions involving foreign currency which allows flexibility of installation, including various network configurations, and co-existence of graphic user interfaces with other personal computer applications on multi-use terminals and personal computers.

It is a further feature and advantage of the present invention to provide a method and system for performing multibank automated financial transactions involving foreign currency which affords flexibility in implementation, such as allowing participating banks to implement their own pricing algorithms and to extract their own spreads and impose different trading limits and controls on users based on their own internal criteria.

It is still another feature and advantage of the present invention to provide a method and system for performing multibank automated financial transactions involving foreign currency which assures impartiality in implementation.

It is a still further feature and advantage of the present invention to provide a method and system for performing mulitbank automated financial transactions involving foreign currency which leverages current systems and technology.

To achieve the stated and other features, advantages, and objects, an embodiment of the present invention provides a method and system for performing multibank financial transactions involving foreign currencies based upon a number of discrete, standing price foreign exchange dealing systems, each operating under the control of a participating financial institution, such as a bank. A customer-user communicates with each of the discrete dealing systems across a private, secure network and can secure competitive quotes without having to redial into or log in separately to a plurality of systems.

In an embodiment of the present invention, a plurality of participating financial institutions, such as banks, each operates a foreign currency exchange dealing system. Each system receives a feed of foreign currency exchange price quotes from within the particular bank and provides executable quotes to a user across a network in response to the user's request for quotes. A user interface, such as a graphical user interface or computer user interface, on the user's computer terminal, such as the user's personal computer, simultaneously sends a message to the dealing system of each participating bank to obtain an executable quote. As the replies from the banks' dealing systems are received, the user interface displays them on the screen of the user's computer terminal and offers real-time comparison. The user can then select a particular price quote for execution.

In an embodiment of the present invention, when the price quote is selected by the user, a message is sent from the user interface on the user's computer terminal to the dealing system of the chosen bank to accept the price quote. This causes the bank's dealing system to determine whether the price quote is still valid and accept or reject the currency exchange transaction, the outcome being sent back to the user interface and displayed for the user on the screen of the user's computer terminal. If accepted, the dealing system of the chosen bank hands off the selection to the bank's deal capture system for settlement. The system for an embodiment of the present invention makes use of a multibank interface which consists of a number of public remote function calls which are resolved within a particular participating bank's foreign exchange currency dealing system. These function calls allow the dealing system of the particular bank, for example, to receive quote requests from the network, return price quotes, and list transactions.

In an embodiment of the present invention, a user's request for a price quote for a currency exchange transaction is received, for example, by the user entering the request on a user interface, such as a graphical user interface or a computer user interface, of the user's computer terminal. The user enters a selection of one or more parameters for the transaction, such as "Spot," "Forward," and "Swap," as well as a selection to "Get Quote," and the request for quote is automatically sent by the user interface of the user's computer terminal simultaneously to the currency exchange dealing systems of each of the plurality of participating financial institutions.

An embodiment of the present invention makes use of a security application on the user's computer terminal for automatically authenticating the user. The request for quote is automatically sent simultaneously to each of the currency exchange dealing systems by the user interface on the user's computer terminal, which is preconfigured with information about each of the participating financial institutions, such as a network address and security information. The request is sent to each of the dealing systems over a secure network, such as a virtual private network, to which the user's computer terminal is connected, for example, over a dial-up, an integrated services digital network, or a dedicated line.

In an embodiment of the present invention, each dealing system receives a feed of currency exchange price quotes and stores executable price quotes on a table in a repository of price quotes maintained by the dealing system. Upon receiving the request for the price quote, each dealing system automatically returns an executable price quote from its repository of price quotes over the secure network to the user interface on the user's computer terminal, where the price quote of each of the dealing systems is automatically displayed for the user. The price quotes are displayed in real time as they are returned by each dealing system for real-time comparison by the user. The user's selection of one of the price quotes is received by the user entering the user's selection of the particular price quote on the user interface of the user's computer terminal.

In an embodiment of the present invention, when the user enters his or her selection, the selection is automatically sent by the user interface on the user's computer terminal over the secure network to the particular currency exchange dealing system which furnished the selected price quote. If the selection is received by the particular dealing system within a predetermined time after the dealing system furnished the price quote, such as ten seconds, the dealing system automatically reviews the selection against one or more predefined parameters for the user, such as a credit allocation for the user, a maximum transaction size for the user, and a delivery limit for the user, and automatically confirms the selection. Otherwise, if the selection is not received within the predetermined time, in order to avoid a "stale" price quote, for example, the selection is rejected and the price quote updated by the dealing system.

In an embodiment of the present invention, the particular dealing system automatically confirms the selection, for example, by automatically sending a confirmation of the price quote selection for the currency exchange transaction over the secure network to the user interface on the user's computer terminal, where the confirmation is displayed for the user. In addition, the particular dealing system hands the selection off to a deal capture system of the dealing system for settlement of the currency exchange transaction with the user. Optionally, the settled transaction is handed off by the dealing system, for example, over a proprietary network, such as the S.W.I.F.T. network, to a match application for matching between the financial institution side of the transaction and the user side of the transaction.

### BRIEF DESCRIPTION OF THE DRAWINGS

Fig. 1 is a schematic diagram which illustrates an example overview of key components and the flow of information between the key components of the multibank currency exchange trading system for an embodiment of the present invention;
Fig. 2 is a schematic diagram which provides further detail regarding an example of the secure network and the flow of information over the secure network of the multibank currency exchange trading system shown in Fig. 1 for an embodiment of the present invention;
Fig. 3 is a schematic diagram which provides further detail regarding an example of the client side installation of the multibank currency exchange trading system of Fig. 1 for an embodiment of the present invention;
Fig. 4 is a schematic diagram which provides further detail regarding an example of the bank installation for connecting to the multibank currency exchange trading system of Fig. 1 for an embodiment of the present invention; and
Fig. 5 is a flow chart which illustrates an example of a currency exchange transaction for a user over the multibank currency exchange trading system of Fig. 1 for an embodiment of the present invention.

### DETAILED DESCRIPTION OF THE INVENTION

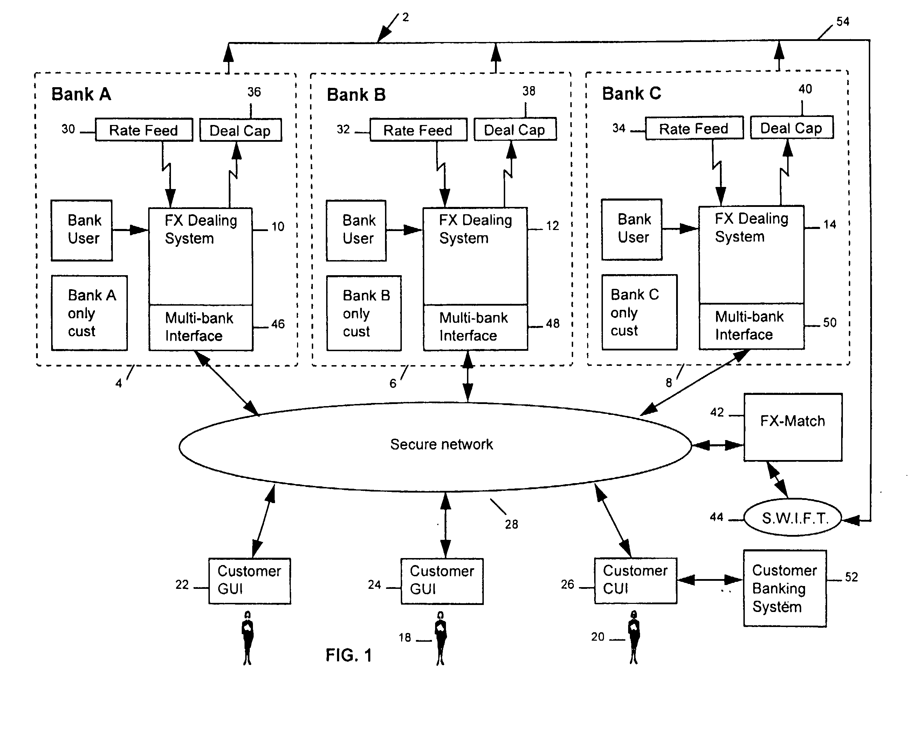

Referring now in detail to an embodiment of the present invention, an example of which is illustrated in the accompanying drawings, Fig. 1 is a schematic diagram which illustrates an example overview of key components and the flow of information between the key components of the multibank currency exchange trading system 2 for an embodiment of the present invention. Referring to Fig. 1, each of a plurality of participating banks 4, 6, and 8 operates a foreign exchange dealing system 10, 12, and 14. The system and method for an embodiment of the present invention is based upon a number of discrete, standing price foreign exchange dealing systems 10, 12, and 14, each operating under the control of the owner bank 4, 6, and 8. Customers 16, 18, and 20, such as corporate/fund managers and the like, at their respective terminals 22, 24, and 26, communicate with each of the dealing systems 10, 12, and 14 across a private, secure network 28.

The system for an embodiment of the present invention makes use, for example, of basic functionality regardless of implementation. Each of the participating banks 4, 6, and 8 operates a foreign exchange dealing system 10, 12, and 14, such as the system of Applicant's U.S. Patent No. 5,737,402, incorporated herein by this reference. Each foreign exchange dealing system 10, 12, and 14 receives a feed of foreign exchange prices 30, 32, and 34 from within the particular bank 4, 6, or 8, provides executable quotations to customers 16, 18, and 20 across the network 28, and hands off completed transactions to the particular bank's deal capture system 36, 38, or 40.

In an embodiment of the present invention, the foreign exchange dealing system 10, 12, and 14 of each participating bank 4, 6, and 8 receives a feed 30, 32, and 34 of foreign exchange prices from within the bank. These prices are typically a conglomeration of external feeds, prices obtained from the dealing room, and include other factors to "massage" the rates. The rates are further manipulated and controlled by the bank-user, such as a member of staff at the bank that is responsible for the foreign exchange dealing system 10, 12, or 14. This individual is responsible for setting and maintaining limits on the system foreign exchange dealing system 10, 12, or 14, monitoring the timeliness and availability of prices, and controlling the availability of the foreign exchange dealing system to the customers 16, 18, or 20.

In an embodiment of the present invention, the foreign exchange rates are temporarily stored in a table within the foreign exchange dealing system 10, 12, or 14, such that the latest rate is always available for customer quotation. In this way the foreign exchange dealing system 10, 12, or 14 can respond to a request for a price from a customer 16, 18, or 20 immediately, without waiting for a trader or administrator to input or authorize a price. In order to simplify the implementation and operation of the system 2 for an embodiment of the present invention, the foreign exchange dealing systems 10, 12, and 14 use the standing-price method of dealing. The quotations presented to the customer 16, 18, or 20 are good for a specific time period, such as ten seconds, determined by parameters within the foreign exchange dealing system 10, 12, or 14. Once quoted, the customer 16, 18, or 20 can accept the price at any time during this period regardless of the movements in the foreign exchange market. The arbitrage risk is mitigated by a combination of the relatively small deal sizes and the relatively high spreads.

In an embodiment of the present invention, the outcome of the foreign exchange trade is determined by the foreign exchange dealing system 10, 12, or 14. If the customer 16, 18, or 20 decides to accept a quotation, the dealing system 10, 12, or 14 reviews the acceptance against other parameters held against the customer's account. These parameters include, for example, credit allocation, maximum transaction size, delivery limits, and the like. This differs, for example, from telephone trading in which the trade is done the moment the customer accepts the price. Completed transactions are handed-off to the respective deal capture systems 36, 38, or 40 of the banks 4, 6, or 8 for automated processing. This interface replaces the dealers' manual input of transactions to a blotter, substantially reducing operational risk and costs.

In an embodiment of the present invention, the customer side of the completed transactions are then handed-off to a foreign exchange match application 42 to be matched against the bank's side, which are received across a network 44, such as the S.W.I.F.T. network. In this way, the customer's deals are automatically confirmed and listed alongside the larger transactions that may have been executed over the telephone.

An embodiment of the present invention also makes use of a multibank interface 46, 48, and 50. The system 2 for an embodiment of the present invention utilizes, for example, a dealing system similar to the system of Applicant's U.S. Patent No. 5,737,402 as the foreign exchange dealing system 10, 12, and 14 at each of the participant banks 4, 6, and 8. In the case where a particular bank already has an established standing-price foreign exchange trading engine, the bank may use the multibank interface 46, 48, or 50 to adapt it to the multibank network 28. The multibank interface 46, 48, and 50 consists of a small number of public remote function calls which must be resolved within the foreign exchange dealing system 10, 12, or 14 of the bank 4, 6, or 8. These function calls allow the foreign exchange dealing system 10, 12, or 14, for example, to receive quote requests from the network 28, return prices, list transactions, and the like.

An embodiment of the present invention makes use of a multibank graphical user interface (GUI) 22 and 24. A customer 16 or 18 accesses the multi-bank environment 2 via a graphical user interface (GUI) application 22 or 24 that runs, for example, on the customer's local personal computer (PC). The GUI application 22 and 24 contains a number of screens to enter parameters describing foreign exchange transactions, including "Spot," "Forward," and "Swap." Once entered, the GUI 22 or 24 performs checks to ensure that sufficient parameters have been entered and that the fields are in the correct format. The customer 16 or 18 may then press a "Get Quote" key.

An embodiment of the present invention also makes use of a multibank computer user interface (CUI) 26. The multibank CUI 26 is, for example, a number of Microsoft object linking embedded (OLE) servers that permit a customer 20 to write an application that can automatically trade foreign exchange with the multibank network 28. The customers, such as customer 20, may "embed" the CUI 26 into their banking systems, such as banking system 52, thereby improving efficiency and further cutting cost. The CUI 26 connects to the secure network 28 and interoperates with the banks 4, 6, and 8 in exactly the same manner as the GUI 22 or 24. All the functions supported by the GUI 22 and 24 are replicated in the CUI 26, including, for example, quotation, transaction execution, and transaction summaries.

In an embodiment of the present invention, when the "Get Quote" key is pressed, the GUI 22 or 24 or the CUI 26 simultaneously sends a message to each of the banks 4, 6, and 8 to obtain an executable rate. As the replies from the banks 4, 6, and 8 are received, the GUI 22 or 24 or the CUI 26 displays them on the screen and offers a real-time comparison of the prices. The customer 16, 18, or 20 may then select a particular price, or the best price offered for execution. When the price is accepted, a message is returned to the chosen bank 4, 6, or 8 to accept the quote, which causes the particular bank 4, 6, or 8 to determine if the quotation is still valid and either accept or reject the transaction, the outcome being displayed on the GUI screen 22 or 24 or the CUI screen 26.

In an embodiment of the present invention, the GUI 22 and 24 or the CUI 26 may also be used to review the prices available from any of a number of trading partners, such as banks 4, 6, or 8. The GUI screen 22 and 24 and the CUI screen 26 operates in two modes, including, for example, a comprehensive view of rates offered by a particular bank 4, 6, or 8 and a comparison of rates offered by the trading partners 4, 6, and 8. The GUI 22 and 24 and the CUI 26 likewise provides a "View Transaction" function which obtains a summary of transactions that have been entered or executed. The function provides a number of optional filters to help select the desired information, including date range, counterparty, currency, and the like. Once the selection criteria have been established, the GUI 22 or 24 or the CUI 26 sends a request to each of the trading partners, such as banks 4, 6, and 8 to request the transactions. The responses are tabulated in a summary grid on the GUI screen 22 or 24 or the CUI screen 26.

An embodiment of the present invention makes use of trading configuration. Communication between a customer 16, 18 or 20 and a particular bank 4, 6, or 8 is restricted by trading relationships, such as entitlements and credit. Before the GUI 22 or 24 of the customer 16 or 18 or the CUI 26 of the customer 20 and the bank's foreign exchange dealing system 10, 12, or 14 can communicate, the GUI 22 or 24 or the CUI 26 must be configured with the network address and security details of the bank 4, 6, or 8, and the bank must be configured with the customer's profile and account details. This information is exchanged between the customer 16, 18, or 20 and bank 4, 6, or 8 when the trading relationship is first established.

It is not necessary for the customer 16, 18, or 20 to maintain a trading relationship with all the banks 4, 6, and 8 participating in the multibank system 2 for an embodiment of the present invention. The GUI 22 or 24 and the CUI 26 only obtains quotes from the particular banks that are configured and ignores the remaining banks, unless a function such as a "back-to-back" is agreed in advance among credit and non-credit banks. The remaining banks are not aware that the particular customer exists, since for example, there is no centralized store of information and the like. In this way, the trading activity and profiles are private between the particular bank and a particular customer.

An aspect of an embodiment of the present invention utilizes a foreign exchange match interface 54. In addition to the deal capture hand-off, each of the foreign exchange dealing systems 10, 12, and 14 can forward their customer deals to the foreign exchange match application 42 for automated confirmation. This function is optional, depending on whether the customer 16, 18, or 20 and bank 4, 6, or 8 are both subscribers to the foreign exchange match system 42. When a transaction is "released," the foreign exchange dealing system 10, 12, or 14 constructs a S.W.I.F.T. MT300 foreign exchange confirmation message containing the details of the transaction from the perspective of the customer 16, 18, or 20. The MT300 message is delivered to the foreign exchange match application 42 across the secure network 28. The foreign exchange match application 42 parses the MT300 message and stores the deal as the customer side of an unmatched transaction.

In an embodiment of the present invention, the bank's version of the transaction is received in a conventional manner. When the transaction is released, the foreign exchange dealing system 10, 12, or 14 transmits the details to the bank's deal capture system 36, 38, or 40. From here the deal is propagated to a settlement system of the bank 4, 6, or 8, resulting in the production of an MT300 message from the bank's perspective. This message is delivered to the foreign exchange match application 42 over the S.W.I.F.T. network 44, where it is automatically matched with the customer's message. Apart from providing automatic end-to-end confirmation, the bank 4, 6, or 8 can include settlement instructions and other related information to enrich the entry on the foreign exchange match system 42.

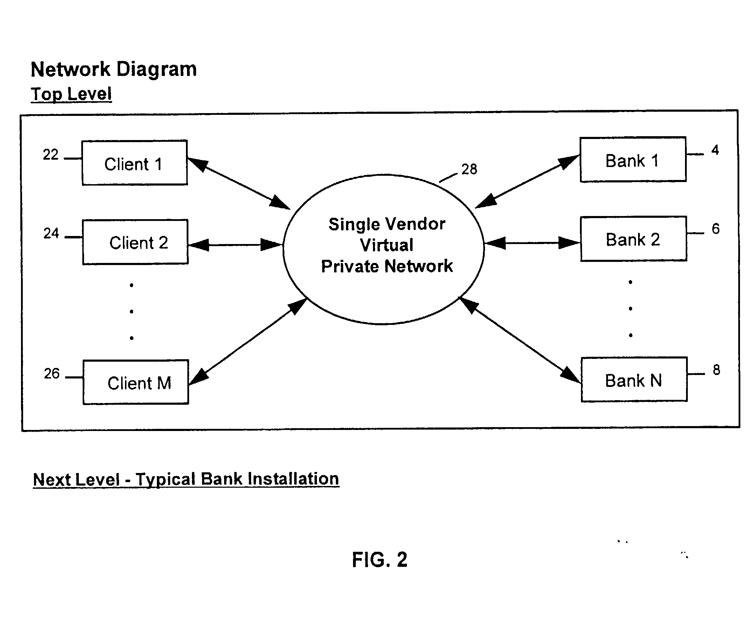

An embodiment of the present invention makes use of the secure network 28. Fig. 2 is a schematic diagram which provides further detail regarding an example overview of the secure network 28 and the flow of information over the secure network 28 for an embodiment of the multibank currency exchange trading system 2 of the present invention. Referring to Fig. 2, the integrity of the multibank electronic foreign exchange execution system 2 for an embodiment of the present invention is predicated on the security of the network 28 needed to carry the messages between counterparties, such as customers 16, 18, and 20 on the one hand, and banks 4, 6, and 8 on the other hand.

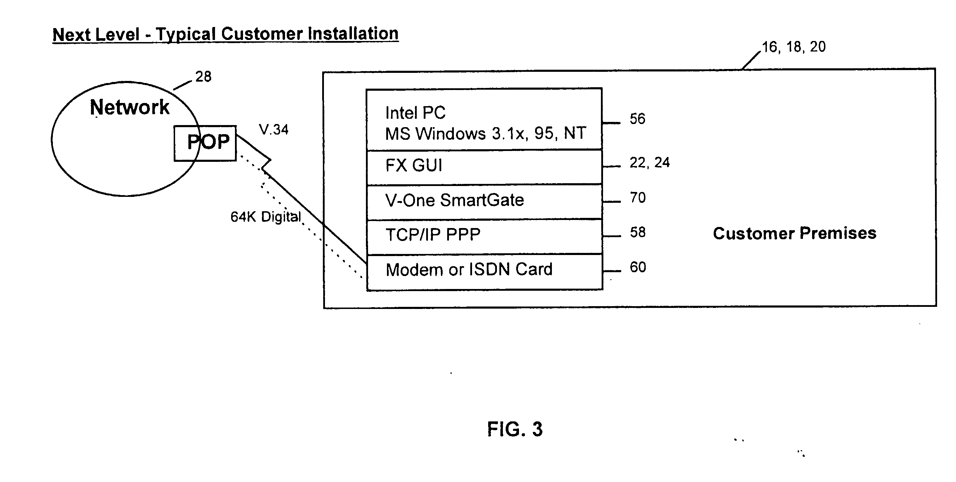

The system 2 for an embodiment of the present invention is implemented using a distributed, client-server architecture implemented over a Transmission Control Protocol/Internet Protocol (TCP/IP) network 28. Fig. 3 is a schematic diagram which provides further detail regarding an example of the client side installation for access to the system 2 for an embodiment of the present invention. Referring to Fig. 3, a client, such as customer 16, 18, or 20 accesses the system 2 using a GUI 22 or 24 or CUI 26 running on a Windows PC 56 connected to a virtual private network (VPN) 28 via a dialup 58, an Integrated Services Digital Network (ISDN) 60, or if necessary, a dedicated connection, such as a leased line. Customers 16, 18, or 20 accessing the bank servers 10, 12, or 14 for foreign exchange rates and trade execution have the option of using Plain Old Telephone Service (POTS) dialup 58 or ISDN 60. It is not anticipated that a dedicated network link is needed by the customers 16, 18, or 20 due to traffic volume, but it is also available as an option.

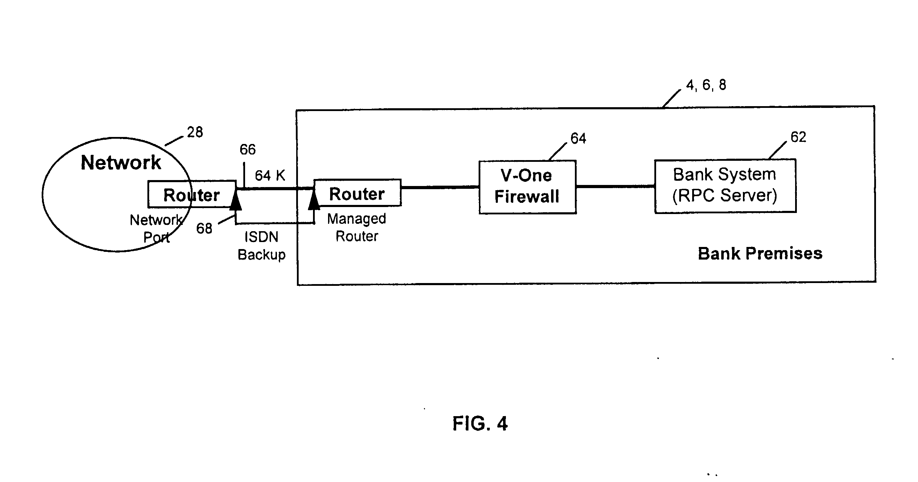

Fig. 4 is a schematic diagram which provides further detail regarding an example of the bank installation for connecting to the system 2 for an embodiment of the present invention. Referring to Fig. 4, each member bank 4, 6, 8 has a system 62 connected to the virtual private network 28 running software capable of handling Remote Procedure Calls (RPCs) from the client GUI 22 or 24 or CUI 26. In an embodiment of the present invention the financial institution system implements an application server or RPC server 62 capable of supporting RPCs which reply to requests for foreign exchange rate quotations and execution of foreign exchange trades. The RPCs are in the format defined, for example, by the Open Software Foundation (OSF) Distributed Computing Environment (DCE) specification, which is a recognized industry standard. The goal of this network solution is simplicity, uniformity, scalability, and being highly fault tolerant, exhibiting high availability.

The system 2 for an embodiment of the present invention includes one or more security applications which function as a firewall 64. Management of the firewall 64 is over a secure TCP/IP link to the virtual private network 28. Security of the link requires user authentication and Data Encryption Standard (DES) encryption to the firewall 28. In order to authenticate the end user to the system 2, system software transparently performs mutual challenge/response authentication for each session that is created. The mutual challenge/response authentication requires each party to send the other party a random number, which the other party returns encrypted under a secret key known to both parties.

The security software at the heart of the configuration for an embodiment of the present invention is the firewall 64. It is anticipated, for example, that a third-party vendor will administer the firewall 64 for the multibank system 2. Management of the firewall 64 is over the secure TCP/IP link to the virtual private network 28 built specifically for the multibank system 2. Security of that link is implemented using technology that provides user authentication and DES encryption to the firewall 64.

The system for an embodiment of the present invention is implemented over a single-vendor Frame Relay TCP/IP Virtual Private Network (VPN) 28. All member banks 4, 6, and 8 are directly connected 24 hours a day, seven days a week, for example, through 64kbps links 64, with ISDN backup 66 for minimal downtime under failure. A standard building block is used at each bank with a common carrier managed service to the public-side part of the firewall 64, such as a firewall available from V-One Corporation. The goals of the network solution for an embodiment of the present invention are simplicity, uniformity, scalability, and being highly fault tolerant, exhibiting high availability. Remote access to the firewall 64 for administration is secured by use of a direct link, for example, from the firewall vendor, such as V-One Corporation, to the VPN 28. Security software, such as SmartGate security software available from V-One Corporation, is used for all remote support of the firewall 64. A single point of failure probability is low and can be optimized, for example, at the option of a member bank 4, 6, or 8 at additional cost.

In an embodiment of the present invention all firewalls 64, for example, are installed, maintained, and administered by the vendor of the firewall 64. To ensure independent, trusted control, only authorized staff of the firewall vendor can access the firewall 64. Member banks 4, 6, and 8 are not permitted write access to the firewall 64 but may have read access to statistics relating to connections to the firewall 64 on their premises. Administration of the firewall 64 is performed remotely by the security software vendor using a secure TCP/IP link to the virtual private network. Security of the link is implemented using technology, such as SmartGate technology from V-One Corporation, the same used for providing user authentication and DES encryption to the firewall 64.

In an embodiment of the present invention, security software, such as SmartGate software available from V-One Corporation, is software that works with the firewalls available from various vendors to provide secure access to member bank networks and systems. Referring further to Fig. 3, each client system 16, 18, or 20 must have security software 70 loaded and running to successfully connect to a member bank network or system 4, 6, or 8 protected by the firewall 64 that is enabled, for example, for SmartGate available from V-One Corporation. The security software 70 provides, for example, dual challenge mutual authentication of each user and 56 bit DES encryption of the established session, which means that each side of the connection must authenticate itself to the other.

In an embodiment of the present invention, each customer user 16, 18, and 20 is issued, for example, a smart card which contains the authentication key for the firewall 64 of each bank 4, 6, and 8. The user 16, 18, or 20 must register with each bank 4, 6, or 8 to obtain the respective authentication key. This key is obtained when the user 16, 18, or 20 runs, for example, an on-line registration application, such as the V-One On-Line Registration Wizard, from his or her PC 22, 24, or 26 to connect to the firewall 64 and initiate the process which uses a multi-step encrypted exchange of keys. As new member banks become part of the network 2, customer users 16, 18, or 20 must register with the new bank's firewall to receive executable rates and perform trades. If electronic key distribution is not desired, the user authentication keys can be distributed using conventional mailings, separate from the distribution of the smart cards used to store the keys.

In an embodiment of the present invention, the security software is based on personal access in which users 16, 18, or 20 are identified rather than machines. Each user 16, 18 or 20 has some method of personal identification, such as a smart card. A security server, such as a SmartGate server available from V-One Corporation, holds a list of known users, their smart card details, and which applications and servers they are allowed to access. The security server also supports virtual (hard or floppy disk based) smart cards (or tokens), which do not require physical distribution. The user 16, 18, or 20 does not have to work his or her way through a complex set of challenges and responses. The security client software 70 does this for them. The user 16, 18, or 20 simply swipes his or her smart card and enters a secret code to unlock the smart card.

In an embodiment of the present invention, integrated into the security software is a complete suite of authentication technologies, seamlessly providing the ability to mix and match multiple forms of authentication for the same application, on a user-by-user basis. For example, the authentication system, such as an authentication system available from V-One Corporation, supports ISO standard smart cards for both authentication and stored data, as well as virtual smart cards, authentication cards, and X.509 digital certificates. The application level client/server security system is designed to provide tightly controlled access to TCP-based services behind a firewall, without requiring changes in the application or system software on the user's desktop.

In an embodiment of the present invention, the security system client side application 70, runs on the desktop of the customer/user 16, 18, or 20 running, for example, on Windows, Windows 95, Windows NT, or Apple Macintosh. Rather than using a Dynamic Link Library (DLL), replacement Winsock or replacement protocol stack, the security client 70, for example, is a separate application, which runs in its own address space. The end user's application communicates with the security client 70 which, in turn, communicates with the security server on the firewall 64; over an encrypted link.

In an embodiment of the present invention, the application does not have to understand that the security system is in place, either at the client end or at the server end. For applications in which security is being provided to a large end user base, this is a major advantage, since it reduces support costs. Trying to deploy a replacement protocol stack-based application, for example, to a million users is extremely expensive if there are any significant compatibility problems. Using the pure application-based approach is the most direct and easiest to support.

In an embodiment of the present invention, the security client 70 manages authentication and encryption between the desktop and the security server, but it is the server which manages access control. Within the security server is a complete access control database, allowing the administrator to assign each user 16, 18, or 20 to groups, and to apply user or group-level permissions on what applications they may access through the server.

In an embodiment of the present invention, all connection records are maintained by the security server for later analysis, and can be used to form the basis of a pay-per-access application. Since the security server only completes connections that are authenticated and permitted by its access control tables, systems behind the firewall 64 never receive a connection that has not been pre-validated. The connection that is made, however, is an ordinary TCP connection, so the server software does not require any alteration.

In an embodiment of the present invention, the security client 70 presents the user 16, 18, or 20 with a customizable pop-up dialogue box, which includes the ability for the user 16, 18, or 20 to specify how long the session should remain active. This value can be overridden by the administrator at the security server to accommodate site policy. While the security client 70 is "unlocked," the user 16, 18, or 20 can initiate other sessions without further prompting.

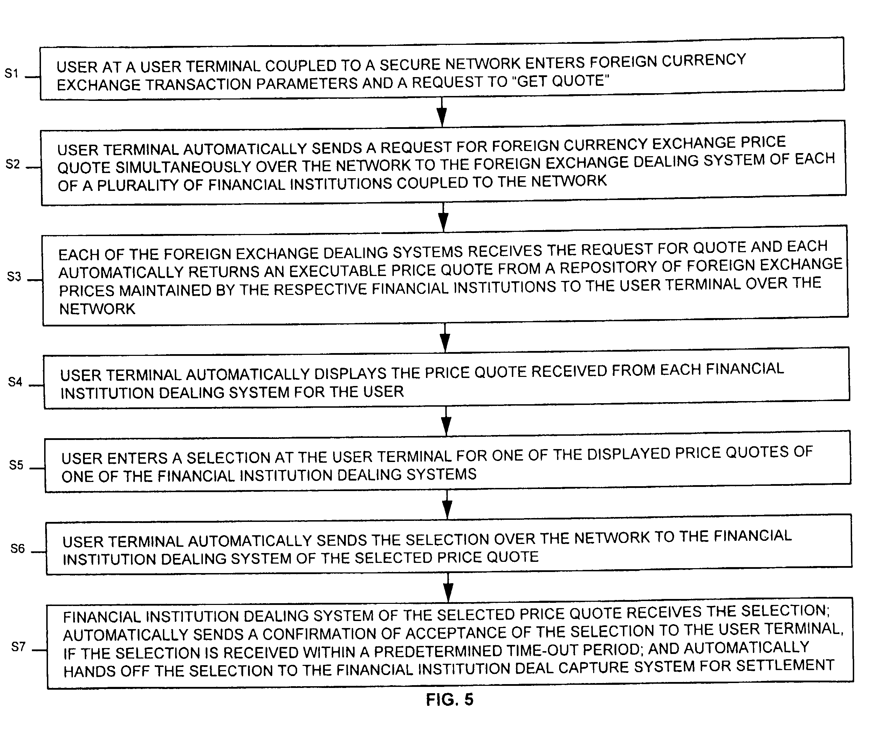

Fig. 5 is a flow chart which illustrates an example of a currency exchange transaction over the multibank currency exchange system 2 for an embodiment of the present invention. Referring to Fig. 5, at S1, a user, such as customer 16, 18, or 20, at a user terminal, such as GUI 22 or 24 or CUI 26, coupled to secure network 28, enters foreign currency exchange transaction parameters and a request to "Get Quote." At S2, the user terminal 22, 24 or 26 automatically sends the request for quote simultaneously over the network 28 to the currency exchange dealing systems 10, 12, and 14 of each of a plurality of financial institutions, such as banks 4, 6 and 8. At S3, the currency exchange dealing system 10, 12, and 14 of each financial institution 4, 6, and 8 receives the request and automatically returns an executable price quote from a repository 30, 32, and 34 of foreign currency exchange prices maintained by each financial institution 4, 6, and 8 to the user terminal 22, 24, or 26 over the network 28.

Referring further to Fig. 5, at S4, the user terminal 22, 24, or 26 receives and automatically displays the price quote received from the foreign exchange dealing system 10, 12, and 14 of each of the financial institutions 4, 6, and 8 for the user 16, 18, or 20. At S5, the user 16, 18, or 20 compares the displayed price quotes and enters a selection at the user terminal 22, 24, or 26 for one of the price quotes received from one of the dealing systems 10, 12, or 14 of one of the financial institutions 4, 6, or 8. At S6, the user terminal 22, 24, or 26 automatically sends the selection over the network 28 to the selected financial institution dealing system 10, 12, or 14. At S7, the selected financial institution dealing system 10, 12, or 14 receives the selection, and if the selection is received within a predetermined time-out period, the selected dealing system 10, 12, or 14 automatically reviews the currency exchange transaction against predefined parameters for the user and automatically sends a confirmation of acceptance of the selection over the network 28 to the user 16, 18, or 20 at the user terminal 22, 24, or 28. The selected dealing system 10, 12, or 14 also automatically hands off the selection to the deal capture system 36, 38, or 40 of the selected dealing system 10, 12, or 14 for settlement and optionally hands off the settled transaction to a matching application 42.

In an embodiment of the present invention, the client/server security system provides end-to-end encryption using, for example, 56-bit DES or RC4. To authenticate the end user to the system, the security system performs a mutual challenge/response authentication for each session that is created. Mutual challenge response is a high-security form of secret-key based authentication, in which each party sends the other a random number, which the other party returns encrypted under a secret key known to both parties. By independently performing the same encryption at both ends, the identity of the other party may be conclusively determined.

An aspect of an embodiment of the present invention is the high performance of the challenge/response approach of the security system employed. Unlike public key authentication techniques, it is computationally inexpensive, while remaining as, or more, secure. Public key based authentication also takes longer to compute in real-time. The challenge/response technique employed by a security system, such as SmartGate, requires only approximately one millisecond.

In an embodiment of the present invention, effectively, the challenge/response technique is limited by the bandwidth of the network connection, unlike the pure public key approach, which is Central Processing Unit (CPU) limited. A typical Secure Sockets Layer (SSL) based application can support about twenty active users on a single SPARC20 Scalable Processor Architecture microprocessor before performance lags become extreme. A Pentium-based firewall, such as SmartWall firewall available from V-One Corporation and using the authentication approach from V-One corporation, can support more than three hundred simultaneous users.

It is reported customers' foreign exchange buying behavior currently bodes well for the system for an embodiment of the present invention that offers multiple bank prices simultaneously. In particular, a significant proportion of customers require multiple quotes to execute transactions over specific amounts. The vast majority of these customers have corporate policies that require competitive quotations in order to trade. Market expectations for a multibank electronic foreign exchange execution system for an embodiment of the present invention and its chances for success are outstanding, in view of the competitive and very fluid environment within which foreign exchange currently finds itself.

An aspect of an embodiment of the present invention, for example, is a pilot for a multibank foreign exchange trading capability for the commercial marketplace and, more specifically, for corporations and fund managers. This path enables distribution of additional proprietary products as well. In this aspect, a strategy is to organize a small group of price makers to participate and initially target large fund manager and corporate customers. The major benefit of such a service is instantaneous access to simultaneous, multi-sourced competitive prices for execution.

Another aspect of an embodiment of the present invention, for example, is a service in which member banks each own, operate, and maintain a system capable of providing rate quotation and trade execution functions in a reliable, secure and consistent manner. A service provider, which can be, for example, a subsidiary of a financial institution, such as a bank, coordinates the collective operation of these individual systems on behalf of the customer base. The client users are provided with a message-based solution which is capable of communicating independently with each member bank's system using strong authentication and encryption technology. Member banks have no knowledge of quotes or trades of the other banks.

In an embodiment of the present invention, the service providing entity is uniquely positioned to offer a complete "value chain product" combining multibank electronic execution with multibank confirmation and settlement, referred to as foreign exchange match. An embodiment of the present invention involves, for example, embedding a high-level technology service within the customer's own environment and empowering the customer to seek as well as act on competitive, compliant rates that minimize the customer's own financial and operational risk.

The introduction of multibank foreign exchange for an embodiment of the present invention provides customers with a more cost effective, efficient way to obtain competitive quotes for foreign exchange transactions. The client seeks the most efficient way to price discovery, and the multibank foreign exchange trading system 2 provides clients with a "one stop" solution. Typically, the average company that trades foreign exchanges uses, for example, ten banks for this activity, with perhaps three-fourths of its volume executed with three of these counterparties. In the commercial foreign exchange market, securing multiple price quotes is a matter of custom, policy, and/or regulation.

Further, in the corporate sector, price outweighs all other service considerations, and customers are often compelled by corporate compliance policies to obtain multiple quotes. In the financial institution sector, it is commonly known that regional banks require multiple bank prices to create their own price. For fund managers, ERISA regulations require, for example, that investment managers provide their clients with "best execution." This means that they must prove for every trade that they received the best price available for a given amount at the time of execution. The method and system for an embodiment of the present invention automates the time consuming process of obtaining prescribed multiple quotes from bank counterparties by phone.

Advantages to clients of the method and system for an embodiment of the present invention include, for example, electronic trading on a standing price and nondiscriminatory price presentation. In other words, the system presents the prices as the quotes are received, such that one bank does not hold back another, and rate time-outs are handled independently. Another advantage to the clients is flexibility of installation, for example, in that network configurations are varied, and GUIs coexist with other PC applications on multi-use terminals/PCs.

The method and system for an embodiment of the present invention also provides, for example, a defensive measure to counter the current practice of clients shopping the rates. It is certain that the client drives the choice as to with which bank to trade. For example, price feeds are not a significant differentiating factor to help client's choose, as they are practically 'cookie cut' with the same tight spreads. An additional advantage of the method and system for an embodiment of the present invention is flexibility in implementation. For example, participating banks implement their own pricing algorithms, extract their own spreads, and impose different trading limits and controls on users based on their own internal criteria.

A further advantage of the method and system for an embodiment of the present invention is impartiality in implementation. Specifically, an embodiment of the present invention enables a non-centralized approach that does not require a bank's data to be off-premises. In addition, an embodiment of the present invention leverages current systems and technology, in that all deal capture processes remain intact irrespective of proprietary trading or multibank trading system execution.

Overarching these individual advantages and benefits of the method and system for an embodiment of the present invention are certain system design characteristics that weigh in favorably from both a participating bank's perspective as well as a customer's perspective. Such characteristics include, for example, state-of-the-art security, use of new hardware and software standards, as well as speedy throughput/performance. In an embodiment of the present invention, the service providing subsidiary of the financial institution positions itself as the third-party intermediary in a multibank environment. An embodiment of the present invention facilitates financial transactions between counterparties, collecting fees from both participants in each transaction.

The concept of a multibank trading system for an embodiment of the present invention at once implies the creation of a level playing field amongst participating banks for certain transactions, such as currency pairs. An embodiment of the present invention allows the creation of a sense of a trading 'club' with an elite membership, allowing each member to enter with its own product and its own customer base intact. The participating banks' individual trading systems remain valid. This approach allows the financial institution to build premium value, for example, through order book, embedded price, and end-to-end processing.

In an embodiment of the present invention, linking to multiple banks remains a client's choice, for example, to facilitate compliance with rules of best execution and the like. In a multibank scenario for an embodiment of the present invention, the financial institution's price is automatically given to contracted customers, whereas the financial institution might not otherwise be among the banks called over the telephone for (competitive) quotes. Increased trade volume thus outweighs any perceived awkwardness. Typically, transactions not exceeding a predetermined transaction amount are targeted for multibank electronic execution.

Undertaking the multibank initiative for an embodiment of the present invention involves, for example, leveraging existing development initiatives, such as use of the re-platforming of a banks' foreign exchange dealing system to full client-server architecture to lay the foundation for a multibank service. Such an initiative also involves, for example, obtaining bank participation, such as assembling a small group of price makers to form the foundation for early membership. It also involves, for example, initiating trading through a pilot, such as commencing trading between the initial customers and participating banks, on a limited hour trading basis, if necessary. Customers can be solicited, for example, as referrals from the participating banks. They may or may not be current users of a bank's proprietary electronic trading system. Finally, such an initiative involves, for example, expanding the sales effort beyond the initial pilot users and across all regions.

As a by-product to the multibank trading system for an embodiment of the present invention, a complementary bank market for the financial institution's executable price can be developed, since many other banks may be neither technologically ready to compete nor ready to make the required investment for either stand-alone electronic execution or multibank participation. An aspect of an embodiment of the present invention is a proprietary banking model, which is a stand-alone version of a foreign exchange dealing system available with or without the financial institution feed, provided to establish experience with running multiple versions of the foreign exchange dealing system. The financial institution can stake out the entire price risk associated with quoting currencies, or at the client's discretion, only that portion of the currency roster that the client is not in a position to cover.

In an embodiment of the present invention, the secure network becomes a fixed asset of the system. As such, it can be leveraged when posing alternatives to banks considering participation. It is very attractive to consider use of the network to carry any single bank's system. The option to connect to additional banks, for example, can be initiated only at a customer's request, such as when the customer needs to be compliant with multiple quote requirements. The investment on the part of a bank which does not yet have its own electronic trading system is streamlined considerably. The service providing subsidiary of the financial institution can offer such a bank a system as well as the necessary networking to support advanced, secure communications. Branching out to participate in a multibank scheme may or may not be desirable, but not at the cost of its own single-bank initiative. Selling, supporting, and managing proprietary systems can be in addition to the service providing subsidiary's main focus of multibank execution.

Various preferred embodiments have been described in fulfillment of the various objects of the invention. It should be recognized that these embodiments are merely illustrative of the principles of the invention. Numerous modifications and adaptations thereof will be readily apparent to those skilled in the art without departing from the spirit and scope of the present invention. Accordingly, the invention is only limited by the following claims.

## Claims

1. A method for performing a currency exchange transaction between a user and a participating financial institution, comprising:
receiving a request for a price quote for the currency exchange transaction for the user;
automatically sending the request for price quote simultaneously to a currency exchange dealing system of each of a plurality of participating financial institutions;
automatically returning the requested price quote from each of the currency exchange dealing systems for the user;
automatically displaying the returned price quote of each of the currency exchange dealing systems for the user;
receiving a selection for the user of the displayed price quote of at least one of the currency exchange dealing systems;
automatically sending the selection to the at least one currency exchange dealing system for the user; and
automatically confirming the selection for the user by the at least one currency exchange dealing system.

2. The method of claim 1, wherein receiving the request further comprises receiving the request at a computer terminal.

3. The method of claim 2, wherein receiving the request at the computer terminal further comprises receiving the request on a user interface at the computer terminal.

4. The method of claim 3, wherein receiving the request on the user interface further comprises receiving the request on one of a graphical user interface and a computer user interface at the computer terminal.

5. The method of claim 1, wherein receiving the request further comprises receiving a selection of at least one parameter for the currency exchange transaction selected from a group of parameters consisting of spot, forward and swap.

6. The method of claim 5, wherein receiving the request further comprises receiving a selection to get a quote for the currency exchange transaction according to the parameter selection.

7. The method of claim 1, wherein automatically sending the request further comprises automatically sending the request from a computer terminal.

8. The method of claim 7, wherein automatically sending the request from the computer terminal further comprises automatically authenticating the user by a security application on the computer terminal.

9. The method of claim 7, wherein automatically sending the request from the computer terminal further comprises automatically sending the request by a user interface on the computer terminal.

10. The method of claim 9, wherein automatically sending the request by the user interface further comprises preconfiguring the user interface with information about each of the plurality of participating financial institutions.

11. The method of claim 10, wherein preconfiguring the user interface further comprises preconfiguring the user interface with a network address and security details for each of the plurality of participating financial institutions.

12. The method of claim 7, wherein automatically sending the request further comprises automatically sending the request from the computer terminal over a network.

13. The method of claim 12, wherein automatically sending the request over the network further comprises automatically sending the request over a secure network.

14. The method of claim 12, wherein automatically sending the request over the network further comprises automatically sending the request over a virtual private network.

15. The method of claim 12, wherein automatically sending the request over the network further comprises automatically sending the request over a connection to the network selected from a group of connections consisting of a dial-up, an integrated services digital network, and a dedicated line.

16. The method of claim 1, wherein automatically returning the requested price quote further comprises automatically returning the requested price quote from a repository of price quotes of each of the currency exchange dealing systems.

17. The method of claim 16, wherein automatically returning the requested price quote from the repository of price quotes further comprises automatically storing price quotes in a table of the repository of each of the currency exchange dealing systems.

18. The method of claim 17, wherein automatically storing the current price quotes further comprises receiving a feed of price quotes by each of the currency exchange dealing systems.

19. The method of claim 1, wherein automatically returning the requested price quote further comprises automatically returning the price quote to a computer terminal for the user.

20. The method of claim 19, wherein automatically returning the price quote to the computer terminal further comprises automatically returning the price quote to a user interface on the computer terminal.

21. The method of claim 19, wherein automatically returning the price quote to the computer terminal further comprises automatically returning the price quote to the computer terminal over a network.

22. The method of claim 21, wherein automatically returning the price quote over the network further comprises automatically returning the price quote over a secure network.

23. The method of claim 21, wherein automatically returning the price quote over the network further comprises automatically returning the price quote over a virtual private network.

24. The method of claim 1, wherein automatically displaying the price quote further comprises automatically displaying the price quote of each of the currency exchange dealing systems at a computer terminal.

25. The method of claim 24, wherein automatically displaying the price quote further comprises automatically displaying the price quote of each of the currency exchange dealing systems on a user interface at the computer terminal.

26. The method of claim 24, wherein automatically displaying the price quote further comprises automatically displaying the price quote as returned by each of the currency exchange dealing systems for real-time comparison by the user.

27. The method of claim 1, wherein receiving the selection further comprises receiving the selection at a computer terminal.

28. The method of claim 27, wherein receiving the selection at the computer terminal further comprises receiving the selection on a user interface at the computer terminal.

29. The method of claim 1, wherein automatically sending the selection further comprises automatically sending the selection from a computer terminal.

30. The method of claim 29, wherein automatically sending the selection from the computer terminal further comprises automatically sending the selection by a user interface on the computer terminal.

31. The method of claim 29, wherein automatically sending the selection from the computer terminal further comprises automatically sending the selection over a network.

32. The method of claim 31, wherein automatically sending the selection over the network further comprises automatically sending the selection over a secure network.

33. The method of claim 31, wherein automatically sending the selection over the network further comprises automatically sending the selection over a virtual private network.

34. The method of claim 1, wherein automatically confirming the selection further comprises automatically confirming the selection, if the selection is received by the at least one currency exchange dealing system within a predetermined period of time after returning the requested price quote by the at least one currency exchange dealing system for the user.

35. The method of claim 1, wherein automatically confirming the selection further comprises automatically reviewing the selection against at least one predefined parameter for the user selected from a group of parameters consisting of a credit allocation for the user, a maximum transaction size for the user, and a delivery limit for the user.

36. The method of claim 1, wherein automatically confirming the selection further comprises automatically sending the confirmation to a computer terminal for the user.

37. The method of claim 36, wherein automatically sending the confirmation to the computer terminal further comprises automatically sending the confirmation to a user interface on the computer terminal.

38. The method of claim 36, wherein automatically sending the confirmation to the computer terminal further comprises automatically sending the confirmation to the computer terminal over a network.

39. The method of claim 38, wherein automatically sending the confirmation over the network further comprises automatically sending the confirmation over a secure network.

40. The method of claim 38, wherein automatically sending the confirmation over the network further comprises automatically sending the confirmation over a virtual private network.

41. The method of claim 1, further comprising automatically handing off the selection by the at least one currency exchange dealing system for settlement of the currency exchange transaction with the user.

42. The method of claim 41, wherein automatically handing off the selection for settlement further comprises automatically handing off the selection to a deal capture system of the at least one currency exchange dealing system for settlement of the currency exchange transaction with the user.

43. The method of claim 42, wherein automatically handing off the selection for settlement further comprises automatically handing off the settled currency exchange transaction for a match between the user and the at least one currency exchange dealing system.

44. The method of claim 43, wherein automatically handing off the settled transaction further comprises automatically handing off the settled currency exchange transaction to a match application for the match.

45. The method of claim 44, wherein automatically handing off the settled transaction to the match application further comprises automatically handing oft the settled transaction to the match application over a network.

46. A system for performing a currency exchange transaction between a user and a participating financial institution, comprising:
means for receiving a request for a price quote for the currency exchange transaction for the user;
means cooperating with the receiving means for automatically sending the request for price quote simultaneously to a currency exchange dealing system of each of a plurality of participating financial institutions;
means coupled to the receiving means for automatically returning the requested price quote from each of the currency exchange dealing systems for the user;
means coupled to the returning means for automatically displaying the returned price quote of each of the currency exchange dealing systems for the user;
means cooperating with the displaying means for receiving a selection for the user of the displayed price quote of at least one of the currency exchange dealing systems;
means cooperating with the displaying means for automatically sending the selection to the at least one currency exchange dealing system for the user; and
means coupled to the selection sending means for automatically confirming the selection for the user by the at least one currency exchange dealing system.

47. The system of claim 46, wherein the means for receiving the request further comprises a computer terminal.

48. The system of claim 47, wherein the computer terminal further comprises a user interface of the computer terminal.

49. The system of claim 48, wherein the user interface further comprises one of a graphical user interface and a computer user interface.

50. The system of claim 46, wherein the means for automatically sending the request further comprises a computer terminal having a security application for authenticating the user.

51. The system of claim 46, wherein the means for automatically sending the request further comprises a computer terminal having a user interface preconfigured with information about each of the plurality of financial institutions.

52. The system of claim 51, wherein the information about each of the plurality of financial institutions further comprises a network address and security details for each of the participating financial institutions.

53. The system of claim 46, wherein the means for automatically sending the request further comprises a computer terminal coupled to a network.

54. The system of claim 53, wherein the network further comprises a secure network.

55. The system of claim 53, wherein the network further comprises a virtual private network.

56. The system of claim 46, wherein the means for automatically sending the request further comprises a computer terminal coupled to a network over a connection selected from a group of connections consisting of a dial-up, an integrated services digital network, and a dedicated line.

57. The system of claim 46, wherein the means for automatically returning the requested price quote further comprises a repository of price quotes of each of the currency exchange dealing systems.

58. The system of claim 46, wherein the means for automatically returning the requested price quote further comprises each currency exchange dealing system coupled over a network to a computer terminal.

59. The system of claim 58, wherein the network further comprises a secure network.

60. The system of claim 58, wherein the network further comprises a virtual private network.

61. The system of claim 46, wherein the means for automatically displaying further comprises a computer terminal.

62. The system of claim 61, wherein the means for automatically displaying further comprises a user interface of the computer terminal.

63. The system of claim 46, wherein the means for receiving the selection further comprises a computer terminal.

64. The system of claim 63, wherein the means for receiving the selection further comprises a user interface of the computer terminal.

65. The system of claim 46, wherein the means for automatically sending the selection further comprises a user interface of the computer terminal coupled to the at least one currency exchange dealing system over a network.

66. The system of claim 65, wherein the network further comprises a secure network.

67. The system of claim 65, wherein the network further comprises a virtual private network.

68. The system of claim 46, wherein the means for automatically confirming the selection further comprises the at least one currency exchange dealing system coupled over a network to a computer terminal.

69. The system of claim 46, further comprising means for automatically handing off the selection by the at least one currency exchange dealing system for settlement of the currency exchange transaction with the user.

70. The system of claim 69, wherein the means for automatically handing off the selection for settlement further comprises a deal capture system of the at least one currency exchange dealing system.

71. The system of claim 69, wherein the means for automatically handing off the selection for settlement further comprises means for automatically matching the settled transaction between the currency exchange dealing system and the user.

72. The system of claim 71, wherein the means for automatically matching the settled transaction further comprises a match application coupled to the at least one currency exchange dealing system over a network.
